# EUROPEAN PATENT SPECIFICATION

(11) **EP 1 667 131 B1**
(45) Date of publication and mention of the grant of the patent: **11.11.2009**
(21) Application number: 03818701.9
(22) Date of filing: 16.09.2003
(51) Int. Cl.: G11B 7/09

(54) **TRACKING DEVICE**
TRACKING-EINRICHTUNG
DISPOSITIF DE SUIVI

(43) Date of publication of application: 07.06.2006
(73) Proprietor: FUJITSU LIMITED, Kawasaki-shi, Kanagawa 211-8588 (JP)
(72) Inventor: IKEDA, Toru Fujitsu Limited, Kanagawa 211-8588 (JP)
(74) Representative: Sunderland, James Harry
(86) International application number: PCT/JP2003/011773
(87) International publication number: WO 2005/029477

(56) References cited:
- JP-A- 7 014 197
- JP-A- 2000 067 446
- US-A- 5 870 356

## Description

### Technical Field

The present invention relates to a tracking device.

### Background Art

A conventional tracking device measures a track servo loop gain (an open loop gain) at a reference frequency, and corrects a track actuator acceleration performance constant such that a gain at the reference frequency becomes a reference value.

The conventional tracking device has, as hardware, at least a lens position signal indicating a relative positional deviation amount between a track actuator and a carriage.

The relative positional deviation amount between a track actuator and a carriage refers to a moving distance of the track actuator from a reference point on the carriage.

There is also a two-stage tracking control mechanism not having a lens position signal. However, the two-stage tracking control mechanism has a feedback loop for sequentially estimating the relative positional deviation between a track actuator and a carriage based on a track driving indication value to reduce the relative positional deviation to zero.

As a method of sequentially estimating the relative positional deviation between a track actuator and a carriage based on a track driving indication value, there is a method of filtering the track driving indication value through a transmission function model of the track actuator.

However, even the above method does not include a method of absorbing fluctuation in a displacement amount of the track driving indication value with respect to a DC component.

Also, in the above method, it is necessary to realize a high rank filter, which makes control complicated.

Note that, by measuring a track servo loop gain near a track servo band, driving sensitivity in the frequency band of the track servo band can be corrected to some extent. However, fluctuation of a primary resonance frequency of the track actuator causes to fluctuate driving sensitivity in a low-frequency band near a direct current.
Patent Document 1
JP 05-258330 A
Patent Document 2
JP 05-159318 A
Patent Document 3
JP 06-274913 A
Patent Document 4
JP 2000-67446 A
Patent Document 5
JP 11-161968 A
Patent Document 6
JP 111-45444 A

As error factors for determining a track servo loop gain, there are a track error signal sensitivity error and a track actuator acceleration performance error.

In the conventional technique, first, an amplitude of a track error signal is measured for the purpose of correcting the track error signal sensitivity error.

In the conventional technique, sensitivity correction gain means on an input side is adjusted such that the amplitude becomes a reference level.

In the conventional technique, a track servo loop gain is measured for the purpose of correcting the track actuator acceleration performance error to correct a track actuator acceleration performance constant such that a gain at a reference frequency becomes a reference value.

However, in a system for correcting an amplitude of a track error signal and correcting a track error signal sensitivity error, an error due to distortion or the like of the track error signal is included. As a result, an error is also given to the track actuator acceleration performance constant.

Therefore, conventionally, in order to perform more stable seek servo operation, it has been desired to reduce an error of track actuator acceleration performance and it has been desired to adopt a correction system for a track actuator acceleration performance constant that is not affected by sensitivity of a track error signal.

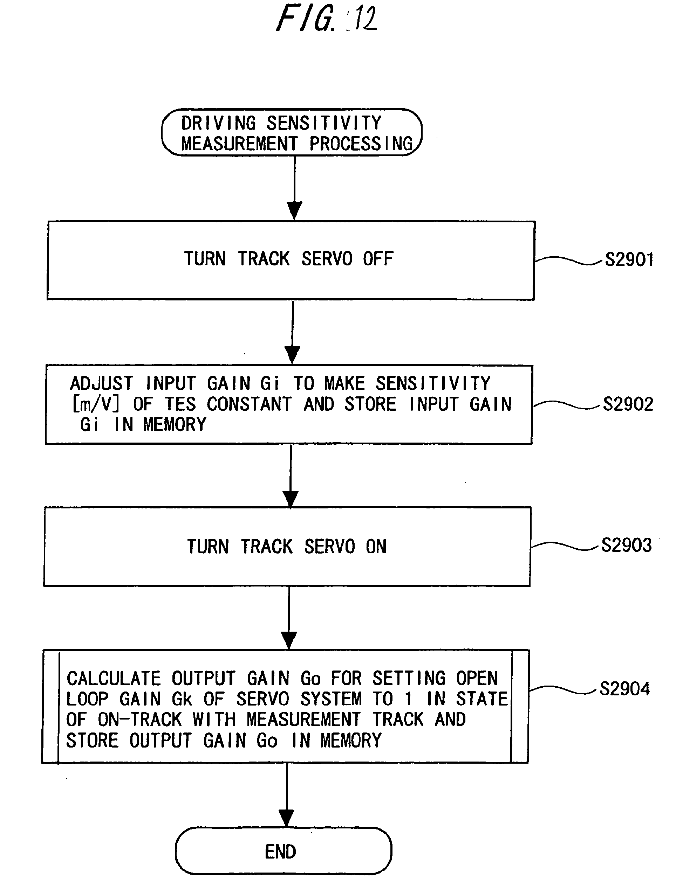

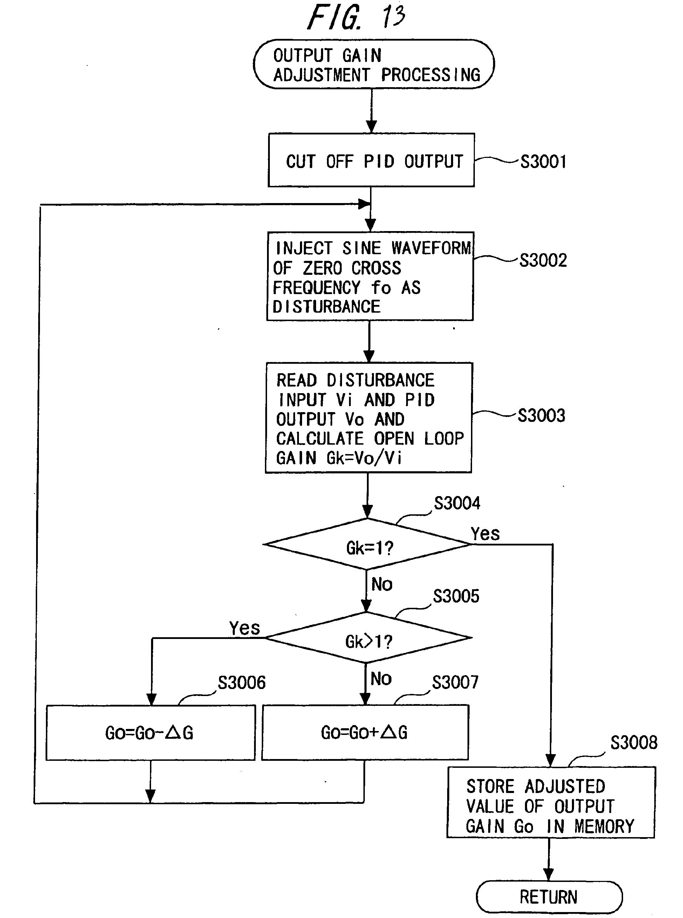

A conventional track actuator driving sensitivity measuring method will be explained with reference to Figs. 12 and 13.

Figs. 12 and 13 are flowcharts of the conventional track actuator driving sensitivity measuring method.

In Fig. 12, first, in S2901, the conventional track actuator driving sensitivity measuring method turns off a track servo and, in S2902, adjusts an input gain Gi to make sensitivity [m/V] of a tracking error signal TES constant and stores the input gain Gi in a memory.

The conventional trackactuator driving sensitivity measuring method measures a signal amplitude V and, when a value of the signal amplitude V becomes constant, treats sensitivity of a tracking error signal as being normalize, and adjusts the input gain Gi to change the signal amplitude.

When the adjustment and storage of the input gain Gi for making sensitivity of the tracking error signal (TES) constant end in S2902, in S2903, the conventional track actuator driving sensitivity measuring method turns on the track servo and, in S2904, calculates an output gain Go for setting an open loop gain Gk at a crossover frequency ωo of a servo system to 1 and stores the output gain Go in the memory.

Fig. 13 is a flowchart describing details of output gain adjustment processing in S2904 in Fig. 12.

The output gain adjustment processing is executed using an adjustment function of a DSP of a tracking device.

First, in S3001, the conventional track actuator driving sensitivity measuring method turns off a servo switch to cut off a loop in an output position of a feedback operation unit.

Subsequently, in S3002, the conventional track actuator driving sensitivity measuring method turns on the servo switch and inputs a sine waveform of a crossover frequency fo in a gain operation unit as a disturbance from a disturbance generator.

The disturbance sine waveform is subjected to gain operation in the gain operation unit and, then, drives the track actuator.

A change in a position of a light beam due to driving of the track actuator is inputted to the gain operation unit as a tracking error signal detected by a TES detecting unit.

In the gain operation unit, the input gain Gi measured in the processing in S2902 in Fig. 12 is set.

Therefore, in the conventional track actuator driving sensitivity measuring method, a tracking error signal normalized to fixed sensitivity is obtained in the gain operation unit and outputted through arithmetic processing of a PID operation unit.

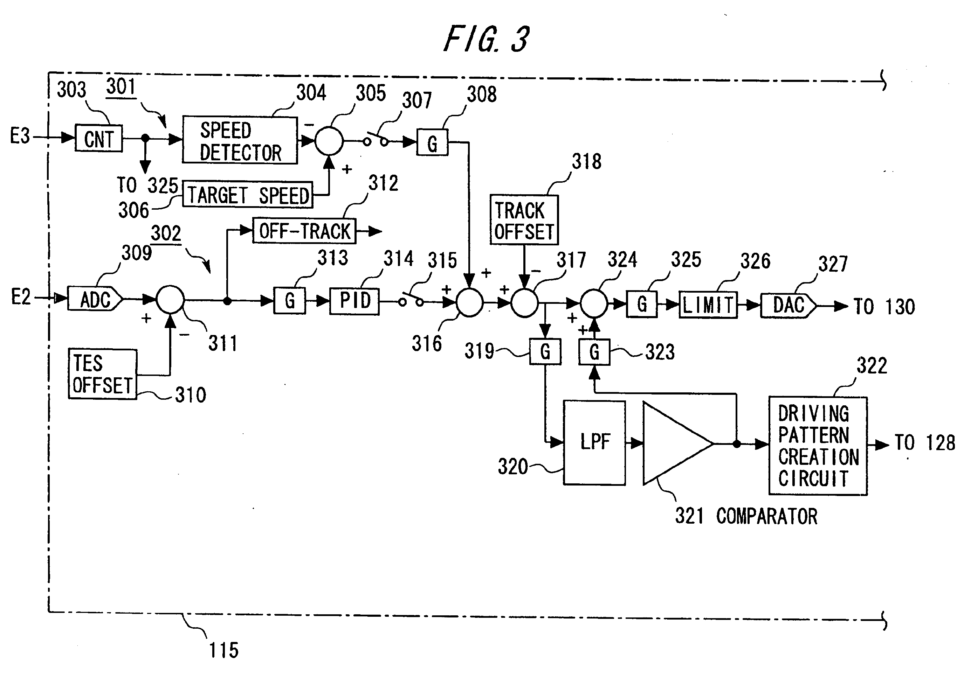

In this state, in S3003 in Fig. 3, the conventional track actuator driving sensitivity measuring method reads a disturbance input Vi to an open loop of a position servo system and an output Vo of the PID operation unit and calculates an open loop gain Gk as Gk=Vo/Vi.

Subsequently, in S3004, the conventional track actuator driving sensitivity measuring method checks whether the open loop gain Gk is 1.

If the open loop gain Gk is 1, the conventional track actuator driving sensitivity measuring method proceeds to S3008 and stores an adjusted value of the output gain Go at this point in the memory.

When the open loop gain Gk is not 1 in S3004, in S3005, the conventional track actuator driving sensitivity measuring method checks whether the open loop gain Gk is larger than 1.

If the open loop gain Gk is larger than 1, the conventional track actuator driving sensitivity measuring method proceeds to S3006, lowers the output gain Go by a predetermined value ΔG, and returns to S3002 . In S3003, the conventional track actuator driving sensitivity measuring method calculates an open loop gain from a disturbance input and an FB output according to disturbance injection of a sine waveform and, in S3004, repeats the processing until the open loop gain Gk becomes 1.

If the open loop gain Gk is smaller than 1 in S3005, in S3007, a predetermined gain ΔG is added to the output gain Go and, in 3004, the processing is repeated from S3002 until the open loop gain Gk becomes 1.

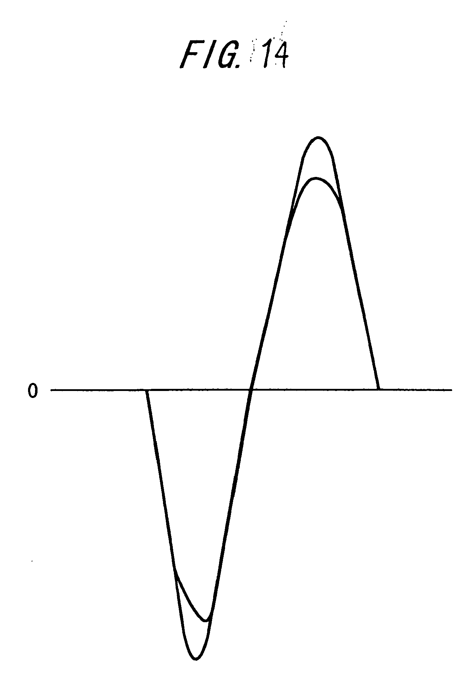

An example of a factor causing fluctuation in track error signal sensitivity adjusting means in the conventional system will be explained with reference to Fig. 14.

Fig. 14 is a conceptual diagram showing an example of a factor causing fluctuation in the track error signal sensitivity adjusting means in the conventional system.

In the conventional technique, when a track error signal is distorted and a peak sensitivity of the track error signal is deteriorated because of an optical factor or the like, a track error signal amplitude is adjusted to be constant to cause an error in normalization of track error signal sensitivity.

In this case, in the conventional technique, since the track error signal sensitivity is adjusted, sensitivity in a track center part becomes excessively large.

There is an example of a case in which inclination near a 0 point does not change and a vertex is rounded.

In other words, when an amplitude is adjusted to be constant, sensitivity near the 0 point becomes excessively large.

In a state in which the track error signal sensitivity has an error, when a track servo loop gain is adjusted and a result of the adjustment is reflected as a track actuator acceleration performance constant, an error is given to the track actuator acceleration performance constant.

On the other hand, in a control system for detecting that a relative positional deviation amount between a track actuator and a carriage increases to a specified amount or more and driving the carriage, when a relative positional deviation amount between a track actuator and a carriage detected from a DC component of a track driving indication value has an error, a displacement amount for driving the carriage varies depending on an apparatus.

When the error is large, the carriage may not be positioned to a target track.

When the relative positional deviation amount becomes excessively large, deviation of an allowable track error center may occur, which may become a cause of deterioration in a recording/reproduction characteristic and a cause of deterioration in adjacent track data.

In a case where a change in a relative position between a track actuator and a carriage occurs at the time when the carriage is driven, it is necessary to reflect the change on a DC component of a track driving indication value and correct the DC component. However, an amount of the correction may be incorrect depending on an apparatus and act as a disturbance.

Japanese publication JP-A-7 014 197 relates to a device for measuring actuator characteristic that is used is a device for correcting eccentricity. The publication discloses oscillating means and a number of track-traverses calculating means.

One of objects of the present invention is to provide a tracking device that calculates an acceleration performance constant of a track actuator without being affected by sensitivity of a track error signal.

One of objects of the present invention is to provide a tracking device that accurately calculates a driving sensitivity coefficient of a track driving indication value per a unit distance.

### Disclosure of the Invention

A tracking device according to the present invention is described in the appended claims.

The track actuator displacement amount is in a proportional relation with the track actuator acceleration indication. Depending on an individual apparatus, the track actuator displacement amount changes with respect to the track actuator acceleration indication because of an influence of driving circuit/actuator characteristics.

In a state in which the focus servo loop is closed, when the track actuator is oscillated at a specified amplitude, a track traverse state of the information recording medium of the track actuator appears in a track error signal. As an example of the information recording medium, there is a disk-like medium.

For example, it is possible to recognize the number of track traverses by slicing the track error signal at a zero point to binarize the track error signal and counting the signal binarized.

The number of traverses in this case changes according to track actuator acceleration performance.

In the present invention, a ratio of the number of track traverses obtained to the number of traverses at the time when the track actuator is accelerated which serves as a reference, is calculated.

In the present invention, a result of the calculation is reflected on a gain for correcting the track actuator acceleration performance, that is, a track actuator acceleration performance constant, to normalize acceleration of the track actuator with respect to the track actuator acceleration indication.

In the present invention, a ratio of the number of track traverses counted for plural periods and integrated to the number of track traverses (for plural periods) serving as a reference is calculated.

Alternatively, in the present invention, an average for one period of the number of track traverses integrated is calculated and a ratio of the average to the number of track traverses (for one period) serving as a reference is calculated.

Accordingly, it is possible to reduce an error factor due to noise or the like at the time of measurement.

When the information recording medium is rotated, since the number of track traverses due to eccentricity of the information recording medium is also counted, an error occurs.

Therefore, in the present invention, rotation of the information recording medium is stopped to perform measurement, whereby the number of track traverses due to eccentricity is not counted.

When the track actuator is oscillated at a frequency lower than the primary resonance frequency, fluctuation in a spring appears as an error.

Thus, in the present invention, the track actuator is oscillated at a frequency larger than the primary resonance frequency.

In the present invention, it is possible to obtain the number of track traverses due to eccentricity by counting the number of track traverses for a half rotation or one rotation in advance in a state in which the focus servo loop is closed. Alternatively, the number of track traverses due to eccentricity may be measured for k rotations.

In the present invention, the track actuator is oscillated at a period 1/n times as large as a rotation period to count the number of track traverses for k rotations.

In the present invention, the number of track traverses due to eccentricity for k rotations is subtracted from the number of track traverses.

In the present invention, a ratio of a result of the subtraction to the reference number of track traverses for k rotations is calculated to reflect the ratio on a gain for correcting acceleration performance of the track actuator, that is, an acceleration performance constant of the track actuator and normalize acceleration of the track actuator with respect to the track actuator acceleration indication.

The reference number of track traverses refers to the number of track traverses at the time when an ideal track actuator is oscillated. When the track actuator is driven for one period, the reference number of track traverses for one period is set. When the track actuator is driven for plural periods, the reference number of track traverses for plural periods is set.

Note that values based on the ratio of the number of track traverses to the reference number of track traverses calculated include the calculated ratio of the number of track traverses to the reference number of track traverses itself.

Moreover, in the present invention, in a state in which the track servo is closed, a track driving indication value at a specific rotation angle during rotation of a medium such as a disk is measured as a first value. Then, while the carriage is fixed (in a state in which the carriage is not displaced), the track actuator alone is moved to traverse plural tracks to cause relative positional deviation between the track actuator and the carriage. In that state, a track driving indication value at the identical rotation angle is measured as a second value, and a difference between the first value and the second value of the track servo driving indication value is calculated. A displacement distance is derived from a relation between the number of tracks and a track pitch among tracks in the measurement, and the difference between the first value and the second value of the track servo driving indication value is divided by the displacement distance to obtain a driving sensitivity coefficient of a track driving indication value per a unit distance.

It is desirable to use a low-frequency component obtained by a track servo operation as the track driving indication value in order to remove noise.

The low-frequency component of the track driving indication value includes a direct current.

In the present invention, the moving means causes the track actuator to spirally follow a track for a specified number of tracks in order to move the track actuator alone to traverse the plural tracks.

In the present invention, the moving means performs track jump to displace the track actuator by the specified number of tracks in order to move the track actuator alone to traverse the plural tracks.

In the present invention, a specific rotation angle is obtained by timing in synchronization with a rotation signal of the spindle motor.

According to the present invention, in a state in which the track servo is closed, rotation of the medium such as a disk is stopped, and the track servo driving indication value is measured as a first value. Then, while the carriage is fixed (in a state in which the carriage is not displaced), the track actuator alone is moved to traverse plural tracks to cause relative positional deviation between the track actuator and the carriage. In that state, a track servo driving indication value set as a second value is used to perform measurement again, and a difference between the first value and the second value of the track servo driving indication value is calculated. A displacement distance of the track actuator is derived from a relation between the number of tracks and a track pitch among tracks in the measurement, and the difference between the first value and the second value of the track servo driving indication value is divided by the displacement distance to obtain a driving sensitivity coefficient of a track driving indication value per a unit distance.

In the present invention, the low-frequency component of the track driving indication value is divided by the driving sensitivity coefficient or the low-frequency component is detected after dividing the track driving indication value by the driving sensitivity coefficient and a resultant output of the low-frequency component is set as a relative positional deviation amount between the track actuator and the carriage. The relative positional deviation amount is used to judge whether it is necessary to drive a device for driving the carriage at the occurrence of a specified relative positional deviation amount between the track actuator and the carriage.

In the present invention, a normalized driving sensitivity coefficient is divided by the track driving indication value or the low-frequency component of the track driving indication value to detect an accurate relative displacement amount between the track actuator and the carriage. Accordingly, a displacement amount to be a trigger for driving the carriage is normalized.

Normalizing means correcting the same driving amount as a driving amount desired by the control unit to be outputted by the driving system.

In the present invention, when the carriage is moved by a specified amount, a relative positional relation between the track actuator and the carriage changes from that before moving the carriage. In order to quickly stabilize the track servo, the control means calculates a track driving indication value from an amount of displacement of the carriage and rewrites the track driving indication value stored in the storing means to change the track driving indication value to a state after operating the carriage.

In the present invention, the track actuator supported on the carriage is provided. In a state in which the track servo loop is closed, a first track driving indication value at a specific rotation angle during one rotation of the disk is measured and the carriage is driven while being positioned in the identical track. In a state in which a relative positions of the carriage to the track actuator is shifted, a second track driving indication value at the identical rotation angle is measured, and a difference between the first track driving indication value and the second track driving indication value is divided by a relative positional deviation amount obtained from the number of tracks to calculate a driving sensitivity coefficient of a track driving indication value.

In the present invention, the specific rotation angle is an angle determined by timing in synchronization with a rotation signal of the spindle motor.

In the present invention, the track actuator supported on the carriage is provided. In a state in which disk rotation is stopped and the track servo loop is closed, a first track driving indication value ismeasured. The carriage is driven while further being located in the identical track. In a state in which relative positions of the track actuator and the carriage are shifted, a second track driving indication value is measured. A difference between the first track driving indication value and the second track driving indication value is divided by a relative positional deviation amount obtained from the number of tracks to calculate a driving sensitivity coefficient of a track driving indication value.

### Brief Description of the Drawings

Fig. 1 is an internal block diagram of an optical disk apparatus to which a first embodiment of a tracking device according to the present invention is applied;
Fig. 2 is a schematic diagram of an enclosure in the optical disk apparatus shown in Fig. 1;
Fig. 3 is a block diagram of a servo system for seek control and on-track control implemented by a DSP provided in a control board in Fig. 1;
Fig. 4 is a functional block diagram of driving sensitivity measurement processing provided in the optical disk apparatus shown in Fig. 1 that is performed with a position servo control system in Fig. 3 as an object;
Fig. 5 is a flowchart of operations in the first embodiment of the tracking device according to the present invention;
Fig. 6 is a flowchart of operations of the first embodiment of the tracking device according to the present invention;
Fig. 7 is a graph of a transmission characteristic of a track actuator supported by a spring on a carriage in the first embodiment of the tracking device according to the present invention;
Fig. 8 is a conceptual diagram showing an operation at the time when the track actuator is sine-driven at a fixed frequency and a fixed driving current, in the first embodiment of the tracking device according to the present invention;
Fig. 9 is a graph showing a gain of the position servo control system provided in the DSP in Fig. 4;
Fig. 10 is a flowchart of operations in a second embodiment of the tracking device according to the present invention;
Fig. 11 is a flowchart of operations in the second embodiment of the tracking device according to the present invention;
Fig. 12 is a flowchart of a conventional track actuator driving sensitivity measuring method;
Fig. 13 is a flowchart of the conventional track actuator driving sensitivity measuring method; and
Fig. 14 is a conceptual diagram showing an example of a factor causing fluctuation in track error signal sensitivity adjusting means in a conventional system.

### Best Mode for carrying out the Invention

A best mode for carrying out the present invention will be hereinafter explained. Embodiments described below are examples. The present invention is not limited to constitutions of the embodiments.

### (First embodiment of a tracking device)

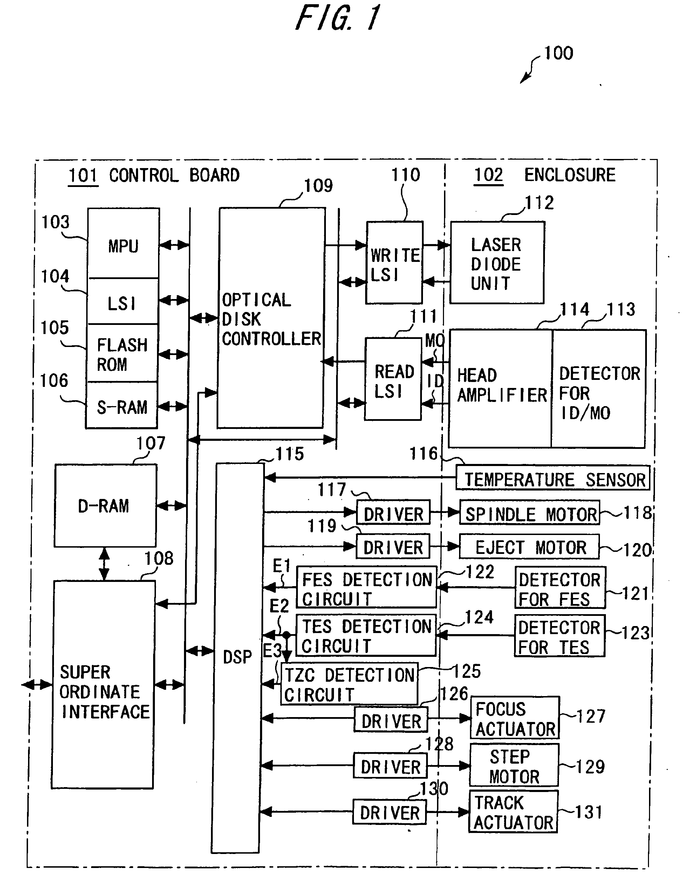

First, an internal structure of an optical disk apparatus to which a first embodiment of a tracking device according to the present invention is applied will be explained with reference to Fig. 1.

Fig. 1 is an internal block diagramof the optical disk apparatus to which the first embodiment of the tracking device according to the present invention is applied.

An optical disk apparatus 100 shown in Fig. 1 mainly includes a control board 101 and an enclosure 102.

In the control board 101, an MPU 103 that performs overall control for a DSP 115 and other units of the optical disk apparatus, a superordinate interface 108 that exchanges commands and data with a superordinate apparatus, an optical disk controller (ODC) 109 that performs processing necessary for reading data from and writing data in an optical disk medium, and the DSP 115 are provided.

The MPU 103 functions as oscillating means, number-of-track-traverses calculating means, and acceleration performance calculating means of the present invention.

An LSI 104 serving as a control logic, a flash ROM 105, an S-RAM 106, and a D-RAM 107 are provided for the MPU 103.

A coefficient L for correcting an acceleration performance constant of a track actuator obtained in this embodiment is stored in the flash ROM 105. The coefficient L will be described later.

The D-RAM 107 functions as a buffer memory and further secures a data buffer area that is used in cache control.

The optical disk controller 109 generates an ECC code by a unit of sector from NRZ write data and, then, converts the ECC code into, for example, a 1-7RLL code.

At the time of read access, the optical disk controller 109 subjects read data by a unit of sector to 1-7RLL inverse conversion and, then, performs error detection and correction with the ECC code, and transfers NRZ read data to the superordinate apparatus.

A write LSI 110 is provided for the optical disk controller 109.

A laser diode control output from the write LSI 110 is given to a laser diode unit 112 provided in an optical unit on the enclosure 102 side.

As a read system for the optical disk controller 109, a read LSI 111 is provided and a read demodulation circuit and a frequency synthesizer are built in the read LSI 111.

A reception signal of return light of a beam from a laser diode by a detector for ID/MO 113 provided in the enclosure 102 is inputted to the read LSI 111 via a head amplifier 114 as an ID signal and an MO signal.

Circuit functions such as an AGC circuit, a filter, and a sector mark detection circuit are provided in the read demodulation circuit of the read LSI 111. The read LSI 111 creates a read clock and read data from the ID signal and the MO signal inputted and demodulates PPM data or PWM data into the original NRZ data.

The read data demodulated by the read LSI 111 is given to the read system of the optical disk controller 109 and transferred to the superordinate apparatus as an NRZ data stream.

A detection signal of a temperature sensor 116 provided on the enclosure 102 side is given to the MPU 103 through the DSP 115.

The MPU 103 controls light emission powers of read, write, and erase of the laser diode to be optimum values on the basis of an environment temperature of units in the apparatus detected by the temperature sensor 116.

The MPU 103 controls a spindle motor 118 provided on the enclosure 102 side using a driver 117 through the DSP 115.

The MPU 103 controls a driver 119 through the DSP 115 at the time of ejection of an MO cartridge and drives an eject motor 120 to eject the MO cartridge.

The DSP 115 performs seek control and on-track control for seeking to be on-track a target track.

In the case of the seek control and the on-track control, the coefficient L for correcting an acceleration performance constant of the track actuator stored in the flash ROM 105 is read out and set in the servo system.

In order to realize a servo function of the DSP 115, a detector FES 121 that receives beam return light from a medium is provided in an optical unit on the enclosure 102 side.

An FES detection circuit (a focus error signal detection circuit) 122 creates a focus error signal E1 from a received light output of the detector for FES 121 and outputs the focus error signal E1 to the DSP 115.

A detector for TES 123 that receives beam return light from the medium is provided in the optical unit on the enclosure 102 side.

A TES detection circuit (a tracking error signal detection circuit) 124 creates a tracking error signal E2 from received light output of the detector for TES 123 and outputs the tracking error signal E2 to the DSP 115.

The tracking error signal E2 is inputted to a TZC detection circuit (a track zero cross detection circuit) 125. The TZC detection circuit 125 creates a track zero cross pulse E3 and inputs the track zero cross pulse E3 to the DSP 115.

The DSP 115 drives a focus actuator 127 via a driver 126 in order to control a position of a beam spot on the medium.

The DSP 115 drives a step motor 129 via a driver 128 in order to control a position of a beam spot on the medium.

The DSP 115 drives a track actuator 131 via a driver 130 in order to control a position of a beam spot on the medium.

In this way, a control block of the optical disk device may be identical with a dual axis track control mechanism. Carriage driving by the step motor 129 may be changed to carriage driving by a VCM or a DC motor.

Note that a result obtained by normalizing acceleration performance is used for driving sensitivity correcting means for a track loop, seek accelerating/decelerating means, and reaction correcting means at the time of carriage driving.

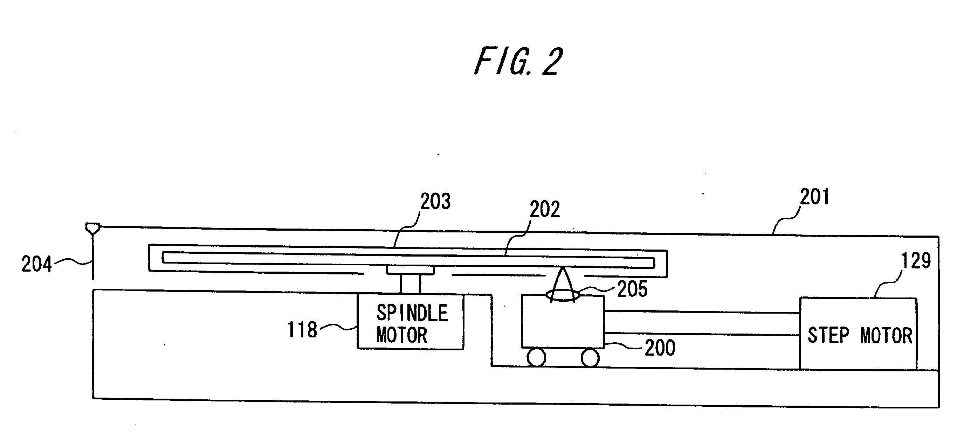

The enclosure 102 in the optical disk apparatus shown in Fig. 1 will be explained with reference to Fig. 2. Fig. 2 is a schematic diagram of an enclosure in the optical disk apparatus shown in Fig. 1.

The spindle motor 118 is provided in a housing 201. An MO cartridge 203 is inserted from an inlet door 204 side with respect to a hub of a rotation shaft of the spindle motor 118.

Consequently, an MO medium 202 in the MO cartridge 203 is mounted on the hub of the rotation shaft of the spindle motor 118 and loaded.

Below the MO medium 202 of the MO cartridge 203 loaded, the step motor 129 is provided and a carriage 200 mounted with an optical head is provided via a read screw.

The carriage 200 is arranged to be freely moved in a direction traversing tracks of the medium by the step motor 129.

An object lens 205 is mounted on the carriage 200. A beam is made incident on the object lens 205 from a laser diode provided in the optical head to focus a beam spot on a medium surface of the MO medium 202.

The object lens 205 is constituted to be moved in an optical axis direction by the focus actuator 127 shown in Fig. 1 and movable in the direction traversing the tracks by the track actuator 131.

It is possible to move the beam spot to a radial position of a target track by controlling the carriage 200 and the track actuator 131.

A function of the servo system for seek control and on-track control realized by the DSP 115 provided in the control board 101 shown in Fig. 1 will be explained with reference to Fig. 3. Fig. 3 is a functional block diagram of the servo system for seek control and on-track control realized by the DSP provided in the control board in Fig. 1.

The servo system includes a speed control system 301 for a track actuator and a position servo system (a first position servo system) 302 for a track actuator.

The servo system shown in Fig. 3 is a servo system that drives the track actuator 131 serving as a subject of low-speed seek control.

As described above, the servo system is divided into two systems, namely, the speed control system 301 and the position servo system 302.

The speed control system 301 inputs the track zero cross pulse E3 to the track counter 303, calculates time of a track zero cross interval according to a clock count, and calculates beam speed with a speed detector 304.

An error between an output of the speed detector 304 and target speed from a register 306 is calculated in an adder 305. The output is subjected to a speed error operation in a gain operation unit 308 via a servo switch 307 and, then, given to an adder 316.

The position servo system 302 for on-track control inputs the tracking error signal E2 from the TES detection circuit 124 in Fig. 1 to an AD converter 309.

The position servo system 302 for on-track control samples the tracking error signal E2 with a sample clock of a predetermined frequency and converts the tracking error signal E2 into digital data (hereinafter referred to as "TES data") with the AD converter 309.

The TES data read in the AD converter 309 is subjected to an arithmetic operation to be added with an output from a TES offset 310 in an adder 311.

The TES data, which is read in the AD converter 309, outputted from the adder 311 is multiplied by a gain in the gain operation unit 313, subjected to proportional, integral, and differential operations in a PID operation unit (a PID filter) 314, and, then, inputted to the adder 316 via a servo switch 315.

The output of the adder 311 is also inputted to the off-track detector 312.

A speed error signal of the speed control system 301 and a tracking error signal of the position servo system 302 pass through the adder 316 and are subjected to track offset by a register 318 in an adder 317.

The tracking error signal is subjected to correction on the basis of an output from a comparator 321 in an adder 324.

The track error signal is subjected to sensitivity correction in a gain operation unit 325, then, passes through a limit 326, and is converted into an analog signal in a DA converter 327 and outputted to a driver 130 as a current indication value for a track actuator 131.

On the other hand, a signal after correction of the track offset is subjected to sensitivity correction in a gain operation unit 319 and inputted to a low-pass filter (LPF) 320.

Since a low-frequency component of a track driving indication value of a spring support type is proportional to a displacement amount of the track actuator, it is possible to use the low-frequency component as track direction position information of a lens.

A low-frequency component that is an output from the low-pass filter 320 is inputted to the comparator 321.

When detecting that the track actuator has reached a specified lens position, the comparator 321 outputs a result of the detection to a driving pattern creation circuit 322.

The driving pattern creation circuit 322 drives a step motor one step on the basis of the output from the comparator 321.

Moreover, at the time of step motor driving, reaction to the track actuator 131 following movement of the carriage 200 occurs.

Therefore, the output from the comparator 321 is subjected to sensitivity correction in the gain operation unit 323 and, then, reaction correction is applied to an output of the adder 317 via the adder 324. Consequently, reaction correction for the track actuator 131 is performed.

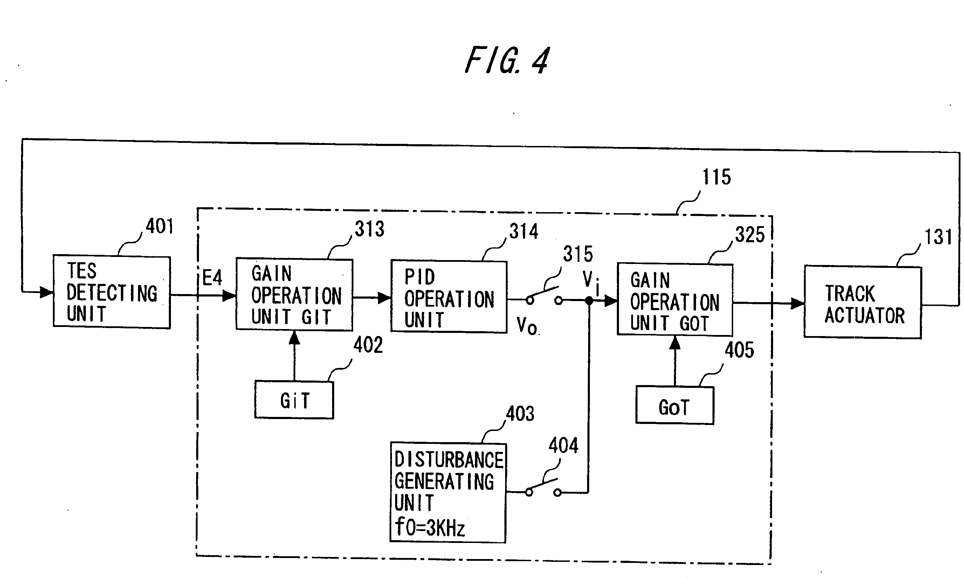

Function of driving sensitivity measurement processing provided in the optical disk apparatus 100 shown in Fig. 1, which is performed with the position servo control system 302 shown in Fig. 3 as an object, will be explained next with reference to Fig. 4. Fig. 4 is a functional block diagram of the driving sensitivity measurement processing provided in the optical disk apparatus shown in Fig. 1 that is performed with the position servo control system in Fig. 3 as an object.

In the driving sensitivity measuring processing, first, according to the function of the DSP 115, the gain operation unit 313 and the PID operation unit 314 of the position servo control system 302 and the gain operation unit 308 provided at an output stage on the speed control system 301 side in Fig. 3 are set as objects of measurement.

It goes without saying that, actually, the servo systems such as the AD converter 309, the servo switch 315, the adder 316, the adder 317, the adder 324, the gain operation unit 325, and the DA converter 327 are set as objects of the driving sensitivity measurement processing. However, in Fig. 4, a part of the servo systems are shown as functions of the DSP 115.

The position servo control system realized by the DSP 115 uses the track actuator 131 as a driving load. Position information according to driving of the track actuator 131 is fed back to the gain operation unit 313 of the DSP 115 as a tracking error signal E4 from a TES detection unit 401.

A disturbance generating unit 403, a servo switch 404, and a register 405 for the driving sensitivity measurement processing is provided for the position servo control system of the DSP 115.

A register 402 is used for setting change for the input gain Gi of the gain operation unit 313 provided at an input stage.

The register 405 is used for a setting change for the output gain Go of the gain operation unit 325 provided at an output stage.

The disturbance generating unit 403 generates a sine waveform of a crossover frequency fo of an open loop gain characteristic with respect to an angular frequency ω of a loop driven by the track actuator 131 as a disturbance.

The generation frequency fo of the sine wave disturbance is in a range of, for example, fo=2 to 3 KHz.

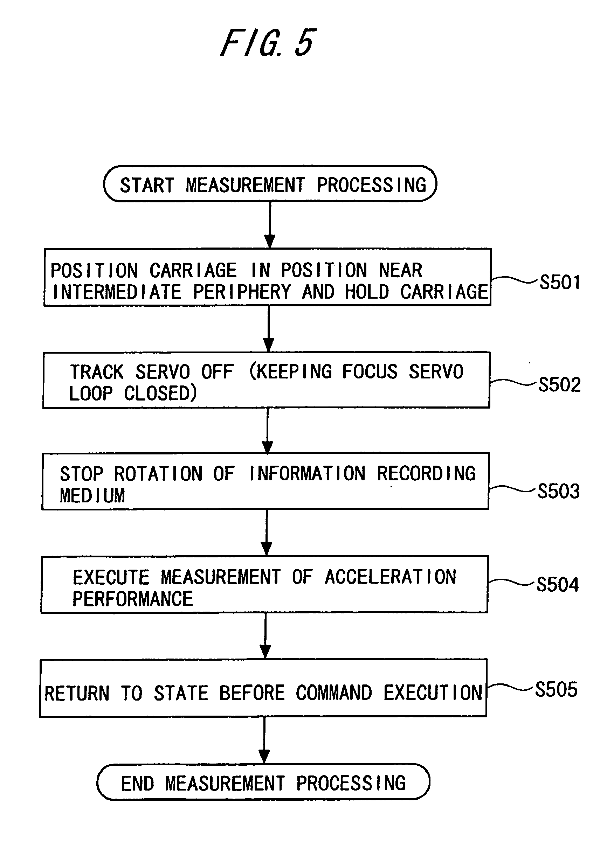

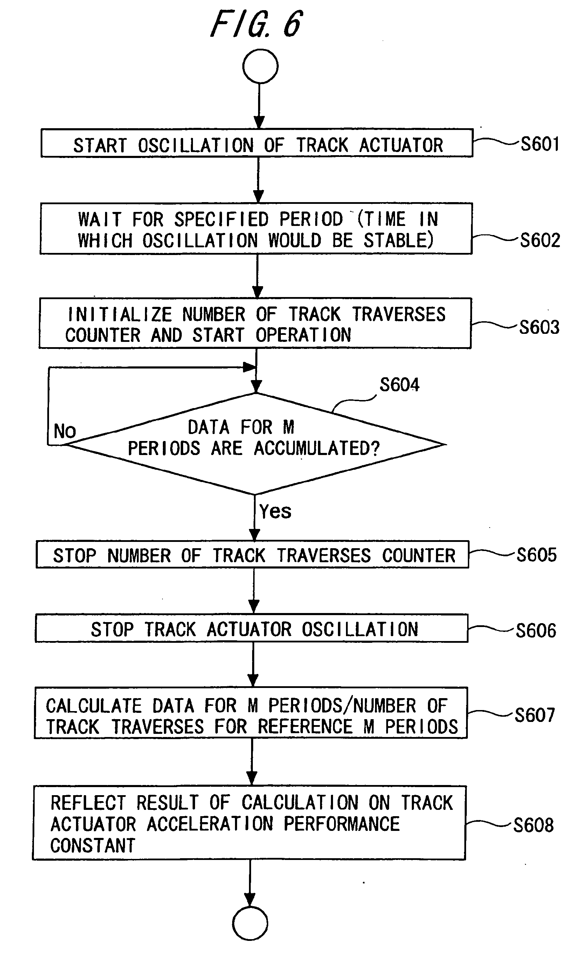

Operations of the first embodiment of the tracking device according to the present invention will be explained next with reference to the drawings. Figs. 5 and 6 are flowcharts of operations of the first embodiment of the tracking device according to the present invention.

An operation in this embodiment is a method of measuring the number of track traverses without rotating a disk serving as an information recording medium.

A case in which the operation is performed according to a command from a superordinate apparatus is explained as an example. Processing in this embodiment may be incorporated in, for example, medium Load processing or servo error retry processing. However, for convenience of stopping rotation of the information recording medium, it is necessary to surely measure the number of track traverses outside a user data area.

In this embodiment, assuming that the operation is executed when an apparatus is started in a factory, a case in which the operation is executed in an intermediate peripheral part of the information recording medium is explained as an example.

In this embodiment, an MPU positions a carriage near an intermediate periphery from start of measurement. It is an object of this embodiment to position the carriage in a place where a groove is surely present on the information recording medium. The carriage does not always have to be positioned in the intermediate periphery.

The MPU holds the carriage in this state (position) to be in an immobile state (S501).

The MPU breaks a track servo loop to bring a focus servo loop into a closed state (S502).

The MPU stops rotation of the information recording medium while further keeping the state (S503).

After executing acceleration performance measurement processing (S504), the MPU returns to a state before execution of the processing (S505) and ends the operation.

An acceleration performance measurement execution step in S504 shown in Fig. 5 will be explained more in detail with reference to Fig. 6.

When the processing is started, the MPU starts the track actuator oscillating at a fixed frequency and a fixed amplitude (S601).

An oscillation frequency at this point is set to a value larger than a primary resonance frequency of the track actuator.

The MPU waits for time in which oscillation would be stably started (S602).

The MPU initializes a counter for the number of track traverses and starts a count operation (S603).

When data accumulation for m periods of oscillation ends, the MPU stops the counter for the number of track traverses and further stops the oscillation of the track actuator (S604, S605, and S606) . It is assumed that m is a natural number. It is preferable that m be equal to or larger than 2.

The MPU calculates data for the m periods/the number of track traverses for reference m periods and reflects a result of the calculation on a track actuator acceleration performance constant (S607 and S608).

A ratio of the data for the m periods and the number of track traverses for the reference m periods is calculated. However, the MPU may calculate an average number of traverse tracks for one period and calculate a ratio of the average number of traverse tracks and a reference number of track traverses for one period.

In calculating the ratio, the number of traverse tracks actually measured and a period of the reference number of track traverses only has to be identical. Plural periods are set to reduce an influence due to noise or the like.

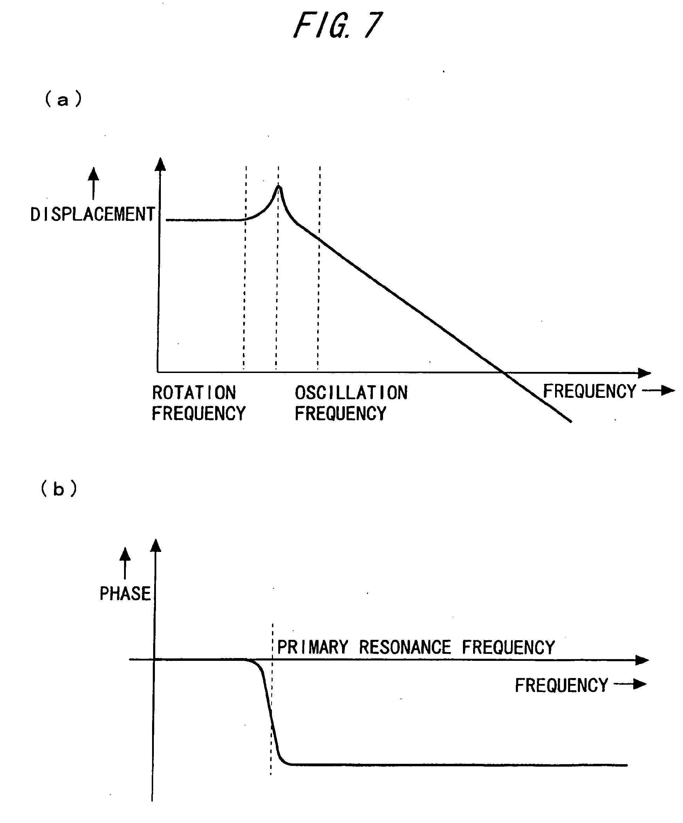

A transmission characteristic of a track actuator supported by a spring on a carriage in the first embodiment of the tracking device according to the present invention will be explained. Fig. 7 is a graph of the transmission characteristic of the track actuator supported by the spring on the carriage in the first embodiment of the tracking device according to the present invention.

Fig. 7 (a) is a graph at the time when the track actuator is driven with a driving current set constant and a displacement amount of the track actuator is indicated on an ordinate and a frequency of a track driving indication value is indicated on an abscissa. Fig. 7(b) is a graph at the time when a phase difference between a track driving indication value and track actuator displacement is indicated on an ordinate and a frequency of a track driving indication value is indicated on an abscissa.

Displacement is constant regardless of a frequency on a low-frequency side of a primary resonance frequency (a place where a peak is present in the figure).

On the other hand, on a high-frequency side, displacement has a characteristic that displacement attenuates at inclination of -40dB/dec.

The characteristic is further explained. Displacement is plotted in a form translated vertically by changing a driving current at which the displacement becomes constant. Displacement is plotted in the same manner according to fluctuation in an actuator electromagnetic characteristic.

When there is fluctuation in a spring constant, the primary resonance frequency changes. When the spring is hardened, the primary resonance frequency shifts to the high-frequency side and a displacement amount decreases. When the spring is softened, the primary resonance frequency shifts to the low-frequency side and a displacement amount increases.

Therefore, it is an object of this embodiment to correct fluctuation in an actuator electromagnetic characteristic and fluctuation in a driving circuit.

An operation at the time when the track actuator is sin-driven at a fixed frequency and a fixed driving current in the first embodiment of the tracking device according to the present invention will be explained.

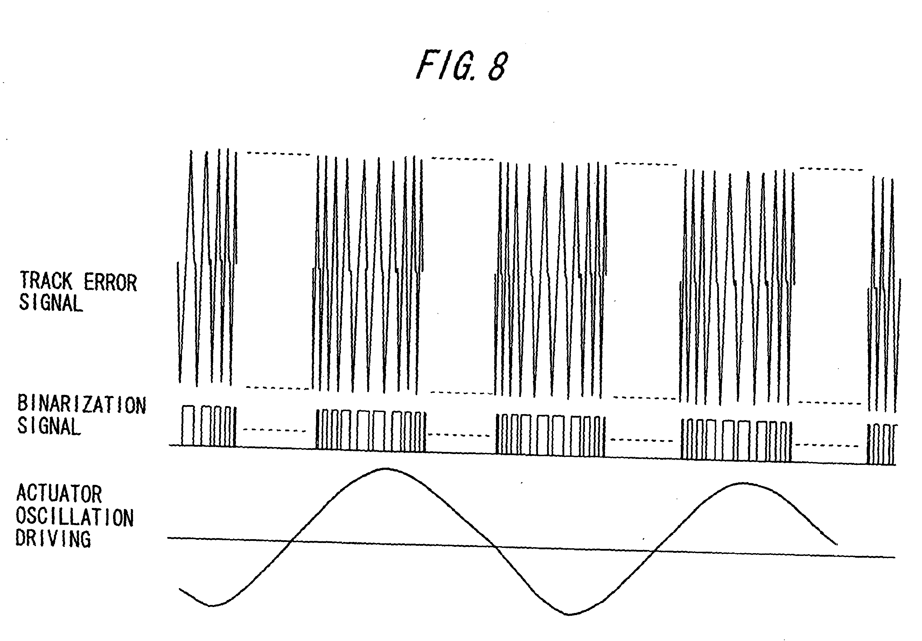

Fig. 8 is a conceptual diagram showing an operation at the time when the track actuator is sin-driven at a fixed frequency and a fixed driving current in the first embodiment of the tracking device according to the present invention.

In Fig. 8, a driving frequency of the track actuator is set to be higher than the primary resonance frequency.

Since the track actuator is sin-driven at a fixed frequency and a fixed driving current, the track actuator is accelerated and displaced relative to the carriage.

Since the track actuator is displaced, a track error signal is modulated.

The MPU binarizes the track error signal at a center voltage and counts the signal binarized. This makes it possible to represent a displacement amount of the track actuator.

It is possible to represent ideal acceleration αt generated in the track actuator as αt=Ka×Kc×Ii×Sinωt.

A constant Ka is an acceleration performance ratio (an electromagnetic characteristic constant) with respect to a driving current, Kc is an actual driving current ratio with respect to a driving current indication, and Ii is a driving current indication value.

A track actuator ideal displacement Xt is Xt=((Ka×Kc×Ii)/(ω^2))×Sinωt. It is seen that αt and Xt are functions proportional to Ka×Kc.

The number of tracks in a sin one period is counted fourfold. It is possible to represent a maximum of track actuator displacement as Xtmax=(D×Tp)/4.

D is the number tracks counted in one period of sin driving and Tp is a pitch interval of tracks carved in an information recording medium.

An ideal condition is ((Ka×Kc×Ii)/(ω^2))=(D×Tp)/4. However, in a state in which there is fluctuation in an electromagnetic characteristic and a driving circuit characteristic, the condition is not satisfied.

Note that it is also possible to consider that ((Ka×Kc×Ii)/(ω^2)) is a distance obtained by multiplying the number of track traverses, which is a reference at the time when displacement is maximum, by a pitch of the tracks if ((Ka×Kc×Ii)/(ω^2)) is represented as ((Ka×Kc×Ii)/(ω^2)×Tp))×Tp.

Thus, generated acceleration is normalized as αtn with respect to the driving current indication value Ii by setting a coefficient L for correcting the fluctuation in an electromagnetic characteristic and a driving circuit characteristic as L=((Ka×Kc×Ii)/(ω^2))/((D×Tp)/4) and setting normalized αtn as αtn=L×(Ka×Kc)×Ii×Sincot. L×(Ka×Kc) is an acceleration performance constant of the track actuator of the present invention.

Note that, when L is represented as a ratio of the number of track traverses, L=((Ka×Kc×Ii)/((ω^2)×Tp))/(D/4).

In this way, it is possible to represent L as a ratio of displacement obtained by multiplying the number of track traverses D by the pitch of the tracks or as a ratio of the number of track traverses.

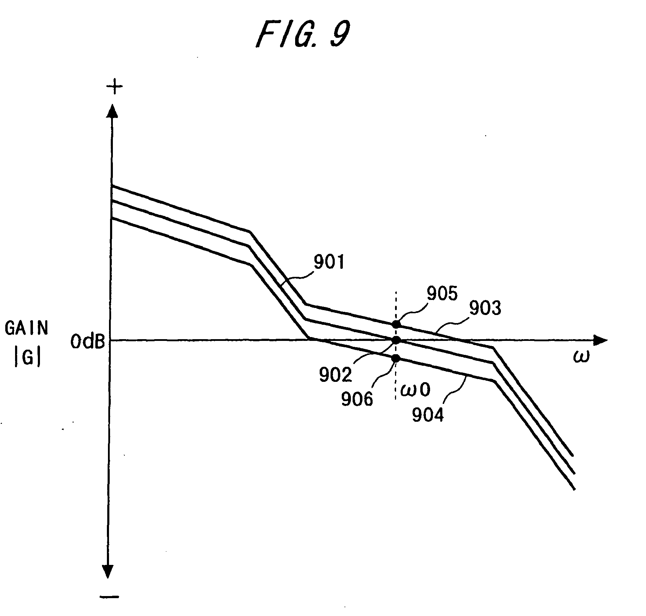

A gain of the position servo control system provided in the DSP 115 in Fig. 4 in the first embodiment of the tracking device according to the present invention will be explained. Fig. 9 is a graph showing a gain of the position servo control system provided in the DSP in Fig. 4.

In a graph in Fig. 9, a logarithmic amount 20 log10|G| of a gainG(jω) is indicated as a gain |G| [dB] on an ordinate with respect to an angular frequency ω [deg] on an abscissa. The graph shows an open loop gain characteristic curve 901 of the position servo control system shown in Fig. 4.

The open loop gain characteristic curve 901 passes a zero cross point 902 where a gain is 0 dB at an angular frequency ωo. The angular frequency ωo at the zero cross point 902 is a crossover frequency and, for example, ωo=2πfo. The angular frequency ωo takes a value in a range of fo=2 to 3 KHz.

If track error signal sensitivity and track actuator driving sensitivity take ideal values, the open loop gain characteristic curve 901 shown in Fig. 9 crosses zero at ωo.

When there is fluctuation in the track error signal sensitivity or the track actuator driving sensitivity, a zero cross frequency shifts as indicated by a curve 903 and a curve 904.

When it is assumed that the track error signal sensitivity becomes constant by specifically making an amplitude of a track error signal constant, the zero cross frequency shifts because of the fluctuation in the track actuator driving sensitivity.

However, when there is distortion in the track error signal, a relation of track sensitivity with respect to a track error signal amplitude is broken. As a result of performing the measurement, an error occurs in correction of track actuator driving sensitivity.

As explained above, according to the first embodiment of the tracking device according to the present invention, the track actuator is oscillated, a track actuator displacement amount is calculated from the number of track zero cross traverses, and an acceleration performance constant of the track actuator is calculated from a ratio of the track actuator displacement amount with respect to a specified displacement amount. Thus, it is possible to calculate an acceleration performance constant of the track actuator without being affected by sensitivity of the track error signal.

### (Second embodiment of the tracking device)

A second embodiment of the tracking device according to the present invention will be explained. This embodiment is different from the first embodiment of the tracking device in that measurement of the number of track zero cross traverses is performed in a state in which the information recording medium continues to be rotated. A constitution and the other operations of this embodiment are substantially the same as the constitution and the other operations of the first embodiment and the same explanation is applied. Thus, detailed explanations of the constitution and the other operations are omitted.

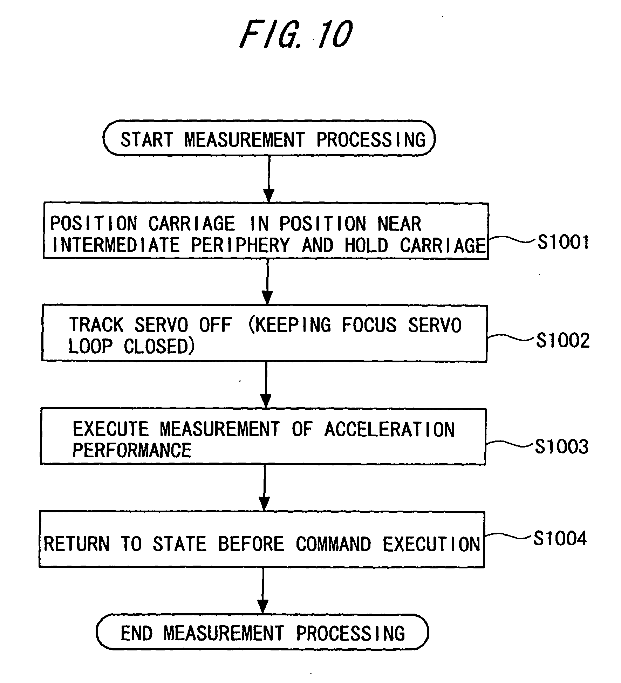

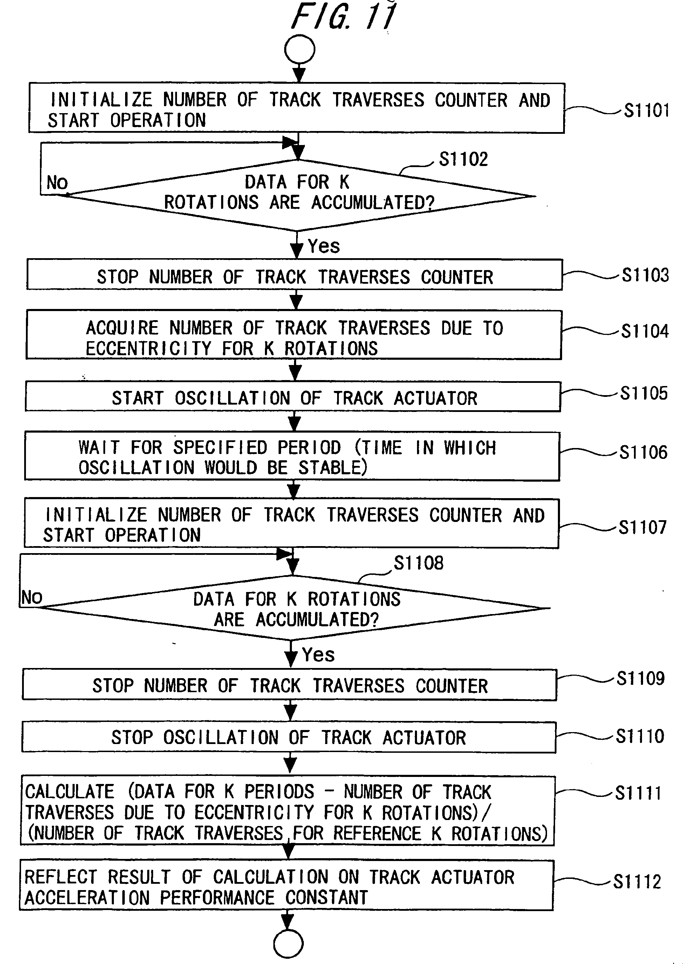

Figs. 10 and 11 are flowcharts of operations of the second embodiment of the tracking device according to the present invention.

The processing may be executed when an apparatus is started in a factory or may be incorporated in Load processing or servo error retry processing executed in a user environment.

An MPU positions a carriage near an intermediate periphery from the start of measurement. It is an object of this embodiment to position the carriage in a place where a group is surely present on the medium. The carriage does not always have to be positioned in the intermediate periphery. The MPU holds the carriage in this state (position) to be in an immobile state (S1001).

The MPU breaks a track servo loop to bring a focus servo loop into a closed state (S1002).

After executing acceleration performance measurement processing, the MPU returns a state before execution of the processing and ends the operation (S1003, S1004).

An acceleration performance measurement execution step in S1003 shown in Fig. 10 will be explained more in detail with reference to Fig. 11.

When the processing is started, the MPU initializes a counter for the number of track traverses and starts a counter operation (S1101).

When data accumulation for k rotations ends, the MPU stops the counter for the number of track traverses and acquires the number of track traverses due to eccentricity for k rotations. Here, k is 1/2 or a natural number (S1102, 1103, and 1104).

The MPU starts oscillating the track actuator at a fixed frequency and amplitude (S1105).

An oscillation period at this point is 1/n of a medium rotation period and a frequency larger than a primary resonance frequency of the track actuator is set. Here, n is a natural number.

The MPU waits for time in which oscillation would be stably started, initializes the counter for the number of track traverses, and starts a counter operation (S1106 and S1107).

When data accumulation for k rotations ends, the MPU stops the counter for the number of track traverses and further stops the oscillation of the track actuator (S1108, S1109, and S1110).

The MPU calculates (data for k periods - the number of track traverses due to eccentricity for k rotations) / (the number of track traverses for reference k rotations) and reflects a result of the calculation on a track actuator acceleration performance constant (S1111 and S1112).

Note that, in this case, reflecting a result of the calculation on a track actuator acceleration performance constant means calculating a coefficient L and calculating normalized αtn according to the same calculation as the first embodiment of the tracking device according to the present invention.

Note that, although a ratio of data for k rotations and the number of track traverses for reference k rotations is calculated, it is also possible that an average number of traverse tracks for one rotation is calculated and a ratio of the average number of traverse tracks and the number of track traverses for reference one rotation is calculated.

In calculating the ratio, the number of traverse tracks actually measured and the number of times of rotation of the reference number of track traverses only has to be identical. Plural number of times of rotation are set to reduce an influence due to noise or the like.

The number of track traverses due to eccentricity is also described as being measured for k rotations. However, it is also possible that the number of track traverses is measured at least for 1/2 rotation and the number of track traverses due to eccentricity for k rotations is calculated.

In this way, in the second embodiment of the tracking device according to the present invention, as in the first embodiment of the tracking device according to the present invention, it is possible to calculate an acceleration performance constant of the track actuator without being affected by sensitivity of a track error signal.

Note that, in the embodiments described above, the optical disk apparatus using an MO medium is explained as an example of the information recording medium. Besides, the present invention may be directly applied to appropriate optical disk apparatuses using a DVD, a phase change medium, and the like.

The present invention is not limited by the numerical values in the embodiments.

### Industrial Applicability

As described above, the tracking device according to the present invention is suitable for optical disk apparatuses using information recording media such as an MO medium and a DVD medium.

## Claims

1. A tracking device, comprising:
an oscillating means that oscillates a track actuator in a state in which a focus servo loop is closed;
whereby the oscillating means perform the oscillation at a fixed frequency ω and at a fixed driving current value Ii;
a number-of-track-traverses calculating means that calculates a number of track traverses of the track actuator traversing tracks of an information recording medium from a track error signal obtained by the oscillation;
the tracking device being **characterized in that** it further comprises
an acceleration performance calculating means that calculates an acceleration performance constant of the track actuator from a value based on a ratio of the number of track traverses calculated and a reference number of track traverses;
whereby the acceleration performance constant corresponds to a product L × (Ka × Kc), L being a coefficient for correcting a fluctuation in an electromagnetic characteristic and a driving circuit, Ka being an acceleration performance ratio with respect to a driving current, and Kc being an actual driving current ratio with respect to a fixed driving current; and
the reference number of track traverses corresponds to a number calculated as the ratio of ideal maximum displacement of the actuator during the oscillation and the track pitch Tp of the tracks of said information medium, said ratio represented by (Ka × Kc × Ii)/(ω^2) × Tp).

2. A tracking device according to claim 1, **characterized in that** the value based on a ratio of the number of track traverses calculated and a reference number of track traverses is a ratio of a distance obtained by multiplying the calculated number of track traverses by a pitch of the tracks and a value corresponding to a distance obtained by multiplying the reference number of track traverses by the pitch of the tracks.

3. A tracking device according to claim 1, **characterized in that** the calculation of the number of track traverses by the number-of-track-traverses calculating means is performed in a state in which rotation of the information recording medium is stopped.

4. A tracking device according to claim 1, **characterized in that** the oscillating means sets an oscillation frequency of the track actuator to a frequency larger than a primary resonance frequency of the track actuator.

5. A tracking device according to claim 1, **characterized in that**
the oscillating means sets, assuming that n is a natural number, an oscillation period of the track actuator to a period 1/n times as large as a rotation period of the information recording medium,
the number-of-track-traverses calculating means calculates, assuming that k is 1/2 or a natural number, a first number of track traverses while the track actuator is oscillated by the oscillating means and the information recording medium rotates k times, calculates a second number of track traverses due to eccentricity of the information recording medium while the information recording medium rotates k times in a state in which the track actuator is not oscillated by the oscillating means, and calculates a third number of track traverses by subtracting the second number of track traverses from the first number of track traverses, and
the acceleration performance calculating means calculates an acceleration performance constant of the track actuator from a ratio of the third number of track traverses and the reference number of track traverses.

## Patentansprüche

1. Spurverfolgungsvorrichtung mit:
einem Oszillationsmittel, das einen Spurbetätiger in einem Zustand oszillieren lässt, in dem eine Fokusservoschleife geschlossen ist, wobei das Oszillationsmittel die Oszillation mit einer feststehenden Frequenz ω und einem feststehenden Antriebsstromwert Ii ausführt;
einem Berechnungsmittel der Anzahl von Spurüberquerungen, das eine Anzahl von Spurüberquerungen des Spurbetätigers, der Spuren eines Informationsaufzeichnungsmediums überquert, von einem durch die Oszillation erhaltenen Spurfehlersignal berechnet;
welche Spurverfolgungsvorrichtung **dadurch gekennzeichnet ist, dass** sie ferner umfasst:
ein Beschleunigungsleistungsberechnungsmittel, das eine Beschleunigungsleistungskonstante des Spurbetätigers von einem Wert berechnet, der auf einem Verhältnis der berechneten Anzahl von Spurüberquerungen und einer Referenzanzahl von Spurüberquerungen basiert;
bei der die Beschleunigungsleistungskonstante einem Produkt aus L × (Ka × Kc) entspricht, wobei L ein Koeffizient zum Korrigieren einer Schwankung einer elektromagnetischen Charakteristik und einer Antriebsschaltung ist, Ka ein Beschleunigungsleistungsverhältnis bezüglich eines Antriebsstromes ist und Kc ein tatsächliches Antriebsstromverhältnis bezüglich eines feststehenden Antriebsstromes ist; und
die Referenzanzahl von Spurüberquerungen einer Zahl entspricht, die als Verhältnis der idealen maximalen Versetzung des Betätigers während der Oszillation und der Spurteilung Tp der Spuren des Informationsmediums berechnet wird, welches Verhältnis durch (Ka × Kc × Ii)/(ω^2) × Tp) dargestellt wird.

2. Spurverfolgungsvorrichtung nach Anspruch 1, **dadurch gekennzeichnet, dass** der Wert, der auf einem Verhältnis der berechneten Anzahl von Spurüberquerungen und einer Referenzanzahl von Spurüberquerungen basiert, ein Verhältnis einer Distanz, die durch Multiplizieren der berechneten Anzahl von Spurüberquerungen mit einer Teilung der Spuren erhalten wird, und eines Wertes entsprechend einer Distanz ist, die durch Multiplizieren der Referenzanzahl von Spurüberquerungen mit der Teilung der Spuren erhalten wird.

3. Spurverfolgungsvorrichtung nach Anspruch 1, **dadurch gekennzeichnet, dass** die Berechnung der Anzahl von Spurüberquerungen durch das Berechnungsmittel der Anzahl von Spurüberquerungen in einem Zustand ausgeführt wird, in dem die Rotation des Informationsaufzeichnungsmediums gestoppt ist.

4. Spurverfolgungsvorrichtung nach Anspruch 1, **dadurch gekennzeichnet, dass** das Oszillationsmittel eine Oszillationsfrequenz des Spurberätigers auf eine frequenz setzt, die größer als einer primäre Resonanzfrequenz des Spurbetätigers ist.

5. Spurverfolgungsvorrichtung nach Anspruch 1, **dadurch gekennzeichnet, dass**
das Oszillationsmittel, unter der Annahme, dass n eine natürliche Zahl ist, eine Oszillationsperiode des Spurbetätigers auf eine Periode setzt, die 1/n Mal so groß wie eine Rotationsperiode des Informationsaufzeichnungsmediums ist,
das Berechnungsmittel der Anzahl von Spurüberquerungen, unter der Annahme, dass k 1/2 oder eine natürliche Zahl ist, eine erste Anzahl von Spurüberquerungen berechnet, während der Spurbetätiger durch das Oszillationsmittel oszilliert und das Informationsaufzeichnungsmedium k Mal rotiert, eine zweite Anzahl von Spurüberquerungen auf Grund von Exzentrizität des Informationsaufzeichnungsmediums berechnet, während das Informationsaufzeichnungsmedium k Mal rotiert, in einem Zustand, in dem der Spurbetätiger durch das Oszillationtionsmittel nicht oszilliert, und eine dritte Anzahl von Spurüberquerungen durch Subtrahieren der zweiten Anzahl von Spurüberquerungen von der ersten Anzahl von Spurüberquerungen berechnet und
das Beschleunigungsleistungsberechnungsmittel eine Beschleunigungsleistungskonstante des Spurbetätigers von einem Verhältnis der dritten Anzahl von Spurüberquerungen und der Referenzanzahl von Spurüberquerungen berechnet.

## Revendications

1. Dispositif de suivi, comportant :
un moyen oscillant qui fait osciller un actionneur de piste dans un état dans lequel une boucle d'asservissement est fermée ;
dans lequel le moyen oscillant effectue l'oscillation à une fréquence fixe ω et à une valeur de courant d'entraînement fixe Ii ;
un moyen de calcul d'un nombre de traversées de pistes qui calcule un nombre de traversées de pistes de l'actionneur de piste traversant des pistes d'un support d'enregistrement d'information à partir d'un signal d'erreur de suivi obtenu par l'oscillation ;
le dispositif de suivi étant **caractérisé en ce qu'**il comporte en outre
un moyen de calcul de performance d'accélération qui calcule une constante de performance d'accélération de l'actionneur de piste à partir d'une valeur en fonction d'un rapport du nombre de traversées de pistes calculé et d'un nombre de référence de traversées de pistes ;
dans lequel la constante de performance d'accélération correspond à un produit L x (Ka x Kc), L étant un coefficient pour corriger une fluctuation dans une caractéristique électromagnétique et un courant d'entraînement, Ka étant d'un rapport de performance d'accélération par rapport à un courant d'entraînement, et Kc étant un rapport du courant d'entraînement présent par rapport pas un courant d'entraînement fixe ; et
le nombre de référence de traversées de pistes correspond à un nombre calculé en tant que rapport du déplacement maximum idéal de l'actionneur pendant l'oscillation et le pas transversal Tp des pistes dudit (Ka x Kc x Ii)/(ω^2) x Tp).

2. Dispositif de suivi selon la revendication 1, **caractérisé en ce que** la valeur en fonction d'un rapport du nombre de traversées de pistes calculé et d'un nombre de référence de traversées de pistes est un rapport d'une distance obtenue en multipliant le nombre calculé de traversées de pistes par un pas transversal et une valeur correspondant à une distance obtenue en multipliant le nombre de référence de traversées de pistes par le pas transversal.

3. Dispositif de suivi selon la revendication 1, **caractérisé en ce que** le calcul du nombre de traversées de pistes par le moyen de calcul de nombre de traversées de pistes est effectué dans un état dans lequel une rotation du support d'enregistrement d'information est stoppée.

4. Dispositif de suivi selon la revendication 1, **caractérisé en ce que** le moyen d'oscillation détermine une fréquence d'oscillation de l'actionneur de piste à une fréquence plus grande qu'une fréquence de résonance primaire de l'actionneur de piste.

5. Dispositif de suivi selon la revendication 1, **caractérisé en ce que**
le moyen d'oscillation détermine, en supposant que n est un nombre naturel, une période d'oscillation de l'actionneur de piste à une période de l/n fois supérieure à une période de rotation du support d'enregistrement d'information,
le moyen de calcul du nombre de traversées de pistes calcule, en supposant que k est 1/2 ou un nombre naturel, un premier nombre de traversées de pistes alors que l'actionneur de piste est fait osciller par le moyen d'oscillation et que le support d'enregistrement d'information tourne k fois, calcule un second nombre de d'enregistrement d'information alors que le support d'enregistrement d'information tourne k fois dans un état dans lequel l'actionneur de piste n'est pas fait osciller par le moyen d'oscillation, et calcule un troisième nombre de traversées de pistes en retranchant le second nombre de traversées de pistes du premier nombre de traversées de pistes, et
le moyen de calcul de performance d'accélération calcule une constante de performance d'accélération de l'actionneur de piste à partir d'un rapport du troisième nombre de traversées de pistes et du nombre de référence de traversées de pistes.
